Europäisches Patentamt

European Patent Office

Office européen des brevets

(11) Numéro de publication: **0 343 027 B1**

(12) **FASCICULE DE BREVET EUROPEEN**

(45) Date de publication de fascicule du brevet: **22.03.95**   (51) Int. Cl.⁶: **C08L 95/00**

(21) Numéro de dépôt: **89401113.9**

(22) Date de dépôt: **20.04.89**

Le dossier contient des informations techniques présentées postérieurement au dépôt de la demande et ne figurant pas dans le présent fascicule.

(54) **Procédé d'obtention de bitumes renfermant au moins un élastomère et produits obtenus.**

(30) Priorité: **25.04.88 FR 8805478**

(43) Date de publication de la demande:
**23.11.89 Bulletin  89/47**

(45) Mention de la délivrance du brevet:
**22.03.95 Bulletin  95/12**

(84) Etats contractants désignés:
**AT BE CH DE ES GB GR IT LI LU NL SE**

(56) Documents cités:
**FR-A- 2 017 264**
**FR-A- 2 018 045**
**FR-A- 2 424 942**

(73) Titulaire: **COLAS S.A.**
**39 rue du Colisée**
**F-75381 Paris Cédex 08 (FR)**

(72) Inventeur: **Langumier, Georges**
**14/16 rue Félicien David**
**F-78100 Saint Germain en Laye (FR)**
Inventeur: **Montmory, Pierre**
**7 rue Poussin**
**F-78330 Fontenay le Fleury (FR)**

(74) Mandataire: **Bérogin, Francis et al**
**c/o CABINET HARLE & PHELIP**
**21 rue de la Rochefoucauld**
**F-75009 Paris (FR)**

## Description

La présente invention concerne un procédé d'obtention de bitumes renfermant au moins un élastomère ou polymère et les produits obtenus.

A l'heure actuelle on sait préparer de nombreux mélanges de bitumes et d'élastomères . Les élastomères ont été introduits dans les compositions de bitume parce qu'ils apportent des propriétés de plasticité qui sont souvent utiles lors de l'application des mélanges à base de bitumes.

On a utilisé différentes catégories d'élastomères ou de polymères, par exemple, des copolymères d'éthylène et d'acétate de vinyle, des copolymères de butadiène et de styrène ainsi que des élastomères du type styrène butadiène styrène.

Les bitumes styrène-butadiène-styrène présentent une caractéristique très intéressante mais leur fabrication exige une haute technologie . L'une des raisons est que le réseau de styrène-butadiène-styrène doit être structuré de façon spécifique dans le bitume. Les procédés d'obtention de bitumes styrène-butadiène-styrène (SBS) selon l'art antérieur impliquent l'utilisation de bitumes compatibles de gammes particulières qui sont mélangés en une étape au styrène-butadiène-styrène. Plus précisément selon les processus courants de fabrication de bitumes styrène-butadiène styrène de l'art antérieur, il est nécessaire d'utiliser un bitume dit compatible à basse teneur en asphaltènes et à haute teneur en aromatiques. Comme l'homme de l'art le sait parfaitement , ces bitumes ne sont pas produits dans toutes les raffineries quel que soit le processus de raffinage.

Les principales difficultés rencontrées dans la fabrication et l'obtention des bitumes styrène-butadiène-styrène sont les suivantes : il est nécessaire d'utiliser des bitumes spéciaux dits compatibles , comme indiqué ci-dessus, qui seuls permettent d'obtenir un mélange homogène et évite le crémage de l'élastomère lors du stockage , d'un autre côté il y a un risque de ne pas obtenir une phase continue polymère.

FR-A-2424942 décrit un procédé d'obtention d'un produit intermédiaire constitué de styrène-butadiène-styrène et d'un bitume compatible.

FR-A-2018045 a pour objet une composition bitumineuse contenant une charge pour le remplissage de joints. L'ingrédient essentiel est du bitume exempt de cire avec une charge et un copolymère séquencé.

FR-A-2017264 décrit des compositions à base de bitumes et de polymères dans lesquelles le constituant bitumeux n'est pas un bitume routier classique.

Pour autant qu'on le sache il n'est pas possible avec les procédés connus de l'art antérieur d'obtenir des bitumes styrène-butadiène-styrène à base de bitumes routiers, c'est-à-dire de bitumes ayant un pourcentage notable d'asphaltènes.

Il existe donc un besoin d'obtenir des bitumes styrène-butadiène-styrène permettant d'utiliser des bitumes routiers classiques selon une proportion notable alors que les procédés selon l'art antérieur n'ont jamais permis d'utiliser de tels bitumes routiers dans l'obtention de bitumes SBS.

Les recherches accomplies ont permis de réaliser des bitumes renfermant au moins un élastomère, notamment du bitume styrène-butadiène-styrène, dans lequel le bitume est en grande partie du bitume routier.

Le procédé selon la présente invention outre qu'il est original en ce qui concerne la fabrication des bitumes styrène-butadiène-styrène est aussi intéressant car il améliore les caractéristiques des produits obtenus.

Le procédé de la présente invention se caractérise également en ce qu'il est très fiable ce qui n'était pas le cas des procédés de l'art antérieur.

La présente invention propose donc un procédé qui permet d'utiliser un bitume routier classique en très forte proportion et qui permet de supprimer le risque de démixion. Il facilite donc le stockage.

Les recherches entreprises par la demanderesse ont permis de montrer qu'il était possible d'obtenir un bitume styrène-butadiène-styrène possédant de très bonnes caractéristiques dans tous les domaines en utilisant pour une partie majoritaire un bitume routier classique à condition de procéder à une fabrication en deux temps au cours de laquelle dans un premier temps on prépare une solution mère à forte concentration en styrène-butadiène-styrène avec un bitume soigneusement sélectionné et dans un deuxième temps on dilue ladite solution mère avec un bitume routier classique .

Le procédé selon la présente invention présente deux avantages très importants, savoir l'emploi en proportion notable d'un bitume routier classique disponible localement et l'obtention d'un liant élastomère stable au stockage.

La présente invention permet en outre d'améliorer les caractéristiques de tenue à froid et d'adhésivité.

La présente invention propose donc un procédé d'obtention de bitumes renfermant au moins un élastomère qui est caractérisé en ce qu'il comprend deux étapes selon lesquelles dans la première étape on prépare une dispersion homogène constituée d'élastomère et de bitume sélectionné à faible pourcenta-

2

ge en produits saturés et en asphaltènes en malaxant ledit élastomère et ledit bitume jusqu'à obtention d'une solution mère à forte concentration en élastomère et dans la deuxième étape on dilue ladite solution mère avec un bitume routier jusqu'à obtention d'un produit homogène sous forme d'un bitume élastomère .

Selon un premier mode de mise en oeuvre on part d'un élastomère suffisamment fin broyé au préalable en le mélangeant au bitume sélectionné ce qui conduit à une solution mère directement utilisable dans la deuxième étape en vue de sa dilution avec le bitume routier.

En variante on part d'un élastomère relativement grossier qui est directement mélangé avec le bitume sélectionné après quoi on soumet le mélange obtenu à un broyage en milieu humide pour obtenir la solution mère utilisable dans la deuxième étape.

A titre d'élastomère, on peut utiliser dans le procédé de l'invention n'importe lequel des élastomères convenant pour être combinés à des bitumes , les élastomères à base de styrène-butadiène-styrène (SBS) , étant hautement préférés . Ce type d'élastomère est intéressant en raison de ses qualités à chaud et à froid ; en effet il est thermo-plastique à haute température et résistant à froid.

La présente invention concerne également les caractéristiques ci-après considérées isolément ou selon toutes leurs combinaisons techniquement possibles :
- l'élastomère est du styrène-butadiène-styrène(SBS)
- le styrène-butadiène-styrène est de type linéaire,
- le styrène-butadiène-styrène est sous forme de poudre, de grains,de granulés .
- on introduit sensiblement de 10 à 20% de styrène-butadiène -styrène ;
- le bitume sélectionné renferme moins de 6% de produits saturés et moins de 7% d'asphaltènes et a un indice d'instabilité colloïdale inférieur à 0,17.
- le bitume routier renferme plus de 8% d'asphaltènes, et a un indice d'instabilité colloïdale compris entre 0,2 et 0,6.
- on incorpore lors de la deuxième étape au moins 30% de bitume routier;

Sous un autre aspect, la présente invention a également pour objet de nouveaux produits, à savoir des bitumes élastomères, notamment des bitumes styrène-butadiène-styrène (SBS) , comprenant , en poids, au moins 30% de bitume routier et au moins 3% d'élastomère, le complément étant constitué de bitume sélectionné.

Selon un mode avantageux de réalisation, les bitumes de l'invention contiennent jusqu'à 80% et généralement plus de 50% en poids de bitume routier .

Selon d'autres caractéristiques, considérées isolément ou en combinaison :
- les bitumes élastomères ont une pénétration à 25°C comprise entre 40 et 200 1/10ème de mm.
- les bitumes élastomères ont une témperature bille et anneau supérieure à 60°C;
- les bitumes ont un indice de pénétrabilité Pfeiffer supérieur à 3,5;
- les bitumes ont un point Fraass inférieur à -20°C ;

La présente invention sera illustrée sans être limitée par les exemples suivants , où, sauf indication contraire toutes les parties et proportions sont exprimées en poids.

EXEMPLE 1 :

On introduit du styrène-butadiène-styrène broyé dans un malaxeur à axe vertical contenant du bitume sélectionné, c'est-à-dire un bitume renfermant moins de 7% d'asphaltènes et ayant un indice d'instabilité colloïdale inférieur à 0,17 et renfermant aussi moins de 6% de produits saturés . Le styrène-butadiène-styrène représente 10 à 20% de la solution mère . Dans une deuxième étape on dilue le produit obtenu selon l'étape 1 ci-dessus avec un bitume routier classique pour avoir un bitume styrène-butadiène-styrène renfermant au moins 3% en styrène-butadiène-styrène .

EXEMPLE 2

On introduit des granulés de styrène-butadiène-styrène d'un diamètre d'environ 3 à 4 mm dans un broyeur en milieu humide et on les mélange à un bitume sélectionné c'est-à-dire à un bitume renfermant moins de 7% d'asphaltènes, moins de 6% de produits saturés et ayant un indice d'instabilité colloïdale inférieur à 0,17. Lorsqu'on obtient une dispersion homogène on réalise un broyage afin d'obtenir une solution mère . Dans une deuxième étape on dilue le produit selon l'étape 1 ci-dessus avec un bitume routier classique pour arriver également à une teneur dans le bitume- styrène-butadiène styrène final d'au moins 3% en styrène-butadiène-styrène .

L'indice d'instabilité colloïdale

$$I_c = \frac{A + S}{R + C}$$

est calculé avec A = % d'asphaltènes, S = % de saturés, R = % de résines et C = % de cycliques .

EXEMPLE 3

On indique ci-après, sous forme de tableau, la comparaison des propriétés de deux produits selon la présente invention (3 et 4) avec deux témoins à base de bitume routier (1 et 2) renfermant 5 % de styrène-butadiène-styrène.

| | | Pénétration* | Température** bille et anneau | Indice de*** pénétrabilité | Point**** Fraass |
|---|---|---|---|---|---|
| (1) Témoin à 5 % de SBS | F | 103 | 75 | + 6 | - 28° C |
| | H | 130 | 78 | | |
| | | | + 25° C | | |
| | B | 64 | 53 | | |
| (2) Témoin à 5 % de SBS | F | 89 | 66 | + 3,8 | - 21° C |
| | H | 134 | 79 | | |
| | | | + 31° C | | |
| | B | 76 | 48 | | |
| (3) Produit de l'invention | F | 91 | 72 | + 5 | - 20° C |
| | H | 118 | 70 | | |
| | | | + 1° C | | |
| | B | 119 | 69 | | |
| (4) Produit de l'invention | F | 82 | 74 | + 5 | - 24° C |
| | H | 91 | 79 | | |
| | | | 0° C | | |
| | B | 84 | 79 | | |
| F = Fabrication | | | | | |
| H = Echantillon prélevé dans le haut de l'éprouvette après l'essai de sédimentation | | | | | |
| B = Echantillon prélevé dans le bas de l'éprouvette après l'essai de sédimentation | | | | | |

\* Mesurée selon la norme NFT 66004
\*\* Mesurée selon la norme NFT 66 008
\*\*\* Calculée selon la formule PFEIFER
\*\*\*\* Mesurée selon projet de mode opératoire RLB 7

Pour apprécier la stabilité au stockage des produits obtenus on utilise un essai selon lequel on caractérise la sédimentation du bitume . Un tel essai consiste à soumettre le bitume pendant 96 heures à une température d'environ 160° C.

On mesure au bout de ce temps la viscosité $\eta 1$ de la partie supérieure et la viscosité $\eta 2$ de la partie inférieure .

Le rapport $\frac{\Delta \eta}{\eta}$ où $\Delta \eta = \eta 2 - \eta 1$ et

$$\eta = \frac{\eta 1 + \eta 2}{\eta 2}$$

caractérise la sédimentation du bitume .

Si $\frac{\Delta \eta}{\eta}$ est positif il y a sédimentation et si $\frac{\Delta \eta}{\eta}$ est négatif il y a crémage .

EP 0 343 027 B1

Comme on peut le constater, sur le tableau ci-dessus , les témoins 1 et 2 fabriqués avec un bitume routier , sans utiliser le procédé de l'invention, donnent lieu à une forte sédimentation après conservation pendant quatre jours à 160°C.

Cette sédimentation est caractérisée par la différence des températures bille et anneau mesurée sur des échantillons prélevés dans le haut et dans le bas de l'éprouvette .

Par contraste les produits 3 et 4 fabriqués en utilisant le procédé de l'invention ne sédimentent pas car la différence des températures bille et anneau est négligeable (inférieure à la reproductibilité de l'essai 2°C).

A titre d'indication le bitume élastomère 3 selon l'invention contient 65% du bitume routier qui a servi à fabriquer le témoin 2.

Il importe de remarquer que dans la présente invention on peut avoir un produit renfermant jusqu'à 80% de bitume routier . Dans l'art antérieur il n'était pas possible d'utiliser du bitume routier car le bitume élastomère fabriqué avec du bitume routier (voir témoins 1 et 2) décantait . Il était donc nécessaire d'employer du bitume compatible. Il importe de remarquer également que dans la présente invention l'expression bitume routier englobe aussi les mélanges à base de bitume routier.

Dans l'exemple 3 on a utilisé la température bille et anneau comme indice pour caractériser la viscosité du bitume dans la partie haute et la partie basse de l'éprouvette . Il y a sédimentation lorsque les températures billes et anneau sont significativement différentes . L'examen des résultats de l'exemple 3 montre que les différences + 25°C et + 31°C pour les témoins 1 et 2 sont significativement différentes alors qu'elles ne le sont pas pour les produits 3 et 4 selon l'invention.

Le procédé selon la présente invention procure une économie importante au niveau industriel car il permet d'utiliser une grande quantité de bitumes routiers disponibles localement qui ne pouvaient pas être utilisés avec les procédés selon l'art antérieur qui nécessitaient de faire venir de loin des bitumes compatibles pour la totalité de la production.

## Revendications

1. Procédé d'obtention de bitumes élastomères renfermant au moins du styrène-butadiène-styrène, le procédé comprenant deux étapes selon lesquelles dans la première étape, on prépare une dispersion homogène constituée de 10% à 20% de styrène-butadiène-styrène et de bitume sélectionné renfermant moins de 6% de produits saturés et moins de 7% d'asphaltènes et ayant un indice d'instabilité colloïdale inférieur à 0,17, en malaxant ledit styrène-butadiène-styrène et ledit bitume sélectionné jusqu'à obtention d'une solution mère et, dans la deuxième étape, on dilue ladite solution mère avec un bitume routier renfermant plus de 8% d'asphaltènes ayant un indice d'instabilité colloïdale compris entre 0,2 et 0,6 jusqu'à obtention d'un produit homogène sous forme d'un bitume élastomère.

2. Procédé selon la revendication 1, caractérisé en ce qu'on part de styrène-butadiène-styrène sous forme de poudre en le mélangeant au bitume sélectionné, ce qui conduit à une solution mère directement utilisable dans la deuxième étape en vue de sa dilution avec le bitume routier.

3. Procédé selon la revendication 1, caractérisé en ce qu'on part de styrène-butadiène-styrène sous forme de granulés qui est directement mélangé avec le bitume sélectionné, après quoi on soumet le mélange à un broyage en milieu humide pour obtenir la solution mère utilisable dans la deuxième étape.

4. Procédé selon l'une quelconque des revendications 1 à 3, caractérisé en ce que le styrène-butadiène-styrène est du styrène-butadiène-styrène linéaire.

5. Procédé selon l'une des revendications 1 et 4, caractérisé en ce que le styrène-butadiène-styrène est sous forme de grains.

6. Procédé selon l'une quelconque des revendications 1 à 5, caractérisé en ce qu'on incorpore lors de la deuxième étape au moins 30% de bitume routier.

7. Bitumes à base de styrène-butadiène-styrène (SBS) obtenus par le procédé selon la revendication 1 et comprenant, en poids, au moins 30% de bitume routier et au moins 3% d'élastomère, le complément étant constitué de bitume sélectionné.

5

**8.** Bitumes selon la revendication 7, caractérisés en ce qu'ils contiennent jusqu'à 80%, et généralement plus de 50% en poids de bitume routier.

**9.** Bitumes selon l'une des revendications 7 ou 8, caractérisés par une pénétration à 25°C comprise entre 40 et 200 1/10ème de mm, mesurée selon la norme NFT 66004.

**10.** Bitumes selon l'une quelconque des revendications 7 à 9, caractérisés par une température bille et anneau supérieure à 60°C, mesurée selon la norme NFT 66008.

**11.** Bitumes selon l'une quelconque des revendications 7 à 10, caractérisés par un indice de pénétrabilité Pfeiffer supérieur à 3,5 mesuré selon la norme Pfeiffer.

**12.** Bitumes selon l'une quelconque des revendications 7 à 11, caractérisés par un point Fraass inférieur à - 20°C, mesuré selon le projet du mode opératoire RLB7.

**Claims**

**1.** Method for obtaining elastomeric bitumens containing at least styrene-butadiene-styrene, which process comprises two steps, according to which, in the first step, a homogeneous dispersion consisting of 10 % to 20 % of styrene-butadiene-styrene and of a selected bitumen containing less than 6 % of saturated products and less of 7 % of asphaltenes and having a colloidal instability value less than 0.17 is prepared by blending the said styrene-butadiene-styrene and the said bitumen until a master solution is obtained and, in the second step, the said master solution is diluted with a roadmaking bitumen containing more than 8 % of asphaltenes having a colloidal instability value between 0.2 and 0.6 until a homogeneous product is obtained in the form of an elastomeric bitumen.

**2.** A process according to claim 1, characterized in that the starting material is in the form of a powder of styrene-butadiene-styrene which is mixed with the selected bitumen, and this leads to a master solution which can be directly employed in the second step with a view to its being diluted with the roadmaking bitumen.

**3.** A process according to claim 1, characterized in that the starting material is in the form of granules of styrene-butadiene-styrene which is directly mixed with the selected bitumen, after which the mixture obtained is subjected to milling in a wet medium to obtain the master solution which can be employed in the second step.

**4.** A process according to any one of claims 1 to 3, characterized in that the styrene-butadiene-styrene is linear styrene-butadiene-styrene.

**5.** A process according to one of claims 1 and 4, characterized in that the styrene-butadiene-styrene is in form of grains.

**6.** A process according to any one of claims 1 to 5, characterized in that at least 30 % of roadmaking bitumen is incorporated during the second step.

**7.** Styrene-butadiene-styrene (SBS) bitumens obtained according to the process of claim 1 and, comprising, by weight, at least 30 % of roadmaking bitumen and at least 3 % of elastomer, the remainder consisting of selected bitumen.

**8.** Bitumens according to claim 7, characterized in that they contain up to 80 % and generally more than 50 % of roadmaking bitumen.

**9.** Bitumens according to one of claims 7 or 8, characterized by a penetration at 25°C of between 40 and 200 tenths of a mm, measured according to NFT 66 004 standard.

**10.** Bitumens according to any one of claims 7 to 9, characterized by a ring-and-ball temperature of above 60°C, measured according to NFT 66 008 standard.

6

**11.** Bitumens according to any one of claims 7 to 10, characterized by a Pfeiffer penetrability value of more than 3.5, measured according to Pfeiffer standard.

**12.** Bitumens according to any one of claims 7 to 11, characterized by a Fraass point below -20°C, measured according to RLB7 operating mode project.

**Patentansprüche**

**1.** Verfahren zur Herstellung von elastomeren Bitumina, die wenigstens Styrol-Butadien-Styrol enthalten, wobei das Verfahren zwei Schritte umfaßt, gemäß welchen im ersten Schritt eine homogene Dispersion, die aus 10% bis 20% Styrol-Butadien-Styrol und aus ausgewähltem Bitumen besteht, das weniger als 6% gesättigte Produkte und weniger als 7% Asphaltene enthält und einen Kolloidinstabilitätsindex von weniger als 0,17 hat, durch Durcharbeiten des genannten Styrol-Butadien-Styrols und des genannten ausgewählten Bitumens, bis eine Mutterlösung erhalten wird, hergestellt wird und im zweiten Schritt die genannte Mutterlösung mit Straßenbau-Bitumen verdünnt wird, das mehr als 8% Asphaltene mit einem Kolloidinstabilitätsindex zwischen 0,2 und 0,6 verdünnt wird, bis ein homogenes Produkt als ein elastomeres Bitumen erhalten wird.

**2.** Verfahren nach Anspruch 1, dadurch gekennzeichnet, daß beim Vermischen mit dem ausgewählten Bitumen von Styrol-Butadien-Styrol als Pulver ausgegangen wird, was zu einer Mutterlösung führt, die im Hinblick auf ihre Verdünnung mit dem Straßenbau-Bitumen im zweiten Schritt direkt verwendbar ist.

**3.** Verfahren nach Anspruch 1, dadurch gekennzeichnet, daß von Styrol-Butadien-Styrol als Granulat ausgegangen wird, das direkt mit dem ausgewählten Bitumen vermischt wird, wonach die Mischung einem Zerkleinern in feuchter Umgebung unterzogen wird, um die Mutterlösung zu erhalten, die in dem zweiten Schritt verwendbar ist.

**4.** Verfahren nach einem der Ansprüche 1 bis 3, dadurch gekennzeichnet, daß das Styrol-Butadien-Styrol geradkettiges Styrol-Butadien-Styrol ist.

**5.** Verfahren nach einem der Ansprüche 1 und 4, dadurch gekennzeichnet, daß das Styrol-Butadien-Styrol in Körnerform vorliegt.

**6.** Verfahren nach einem der Ansprüche 1 bis 5, dadurch gekennzeichnet, daß während des zweiten Schritts wenigstens 30% Straßenbau-Bitumen zugesetzt werden.

**7.** Bitumina auf Basis von Styrol-Butadien-Styrol (SBS), die durch das Verfahren nach Anspruch 1 erhalten wurden und wenigstens 30 Gew.-% Straßenbau-Bitumen und wenigstens 3 Gew.-% Elastomer umfassen, wobei der Rest aus ausgewähltem Bitumen besteht.

**8.** Bitumina nach Anspruch 7, dadurch gekennzeichnet, daß sie bis zu 80% und im allgemeinen mehr als 50 Gew.-% Straßenbau-Bitumen enthalten.

**9.** Bitumina nach einem der Ansprüche 7 oder 8, gekennzeichnet durch eine nach der Norm NFT 66004 gemessene Penetration bei 25°C zwischen 40 und 200 1/10 mm.

**10.** Bitumina nach einem der Ansprüche 7 bis 9, gekennzeichnet durch eine nach der Norm NFT 66008 gemessene Kugel- und Ringtemperatur über 60° C.

**11.** Bitumina nach einem der Ansprüche 7 bis 10, gekennzeichnet durch einen nach der Pfeifferschen Regel gemessenen Pfeifferschen Durchlässigkeitsindex über 3,5.

**12.** Bitumina nach einem der Ansprüche 7 bis 11, gekennzeichnet durch einen nach dem Arbeitsverfahrenskonzept RLB7 gemessenen Fraaß-Punkt unter -20°C.